# EUROPEAN PATENT APPLICATION

(11) **EP 1 780 515 A1**
(43) Date of publication of application: **02.05.2007**
(21) Application number: 05759931.8
(22) Date of filing: 14.07.2005
(51) Int. Cl.: G01D 5/245

(54) **PULSER RING FOR MAGNETIC ROTARY ENCODER**

(30) Priority: 17.08.2004 JP 2004237017
(71) Applicant: NOK Corporation, Minato-ku Tokyo 105-8585 (JP)
(72) Inventor: NAKAGAWA, Takehiro, Fukushima-shi, Fukushima 9601102 (JP); KOBAYASHI, Naoto, Fukushima-shi, Fukushima 9601102 (JP)
(74) Representative: TBK-Patent
(86) International application number: PCT/JP2005/012988
(87) International publication number: WO 2006/018942

(57) **Abstract**

A magnetized layer (12) is integrally bonded to an annular holder (11) installed to a rotating body, the magnetized layer is made of a material obtained by mixing a magnetic fine particle to a rubber elastic material or a synthetic resin material and magnetized in a multipolar manner at a predetermined pitch in a circumferential direction, and a portion having a different sectional shape from the other portions is formed in a part in a circumferential direction in a joining part of the holder (11) with the magnetized layer (12), by a raised part (11c) or the like, so that a significant point of a signal level is formed in this portion on the basis of a difference in a magnitude of a magnetic field, whereby the significant point is set to a rotation angle measurement starting point.

## Description

### Technical Field

The present invention relates to a pulsar ring attached to a rotating body in a magnetic rotary encoder detecting a rotation of the rotating body.

### Background Art

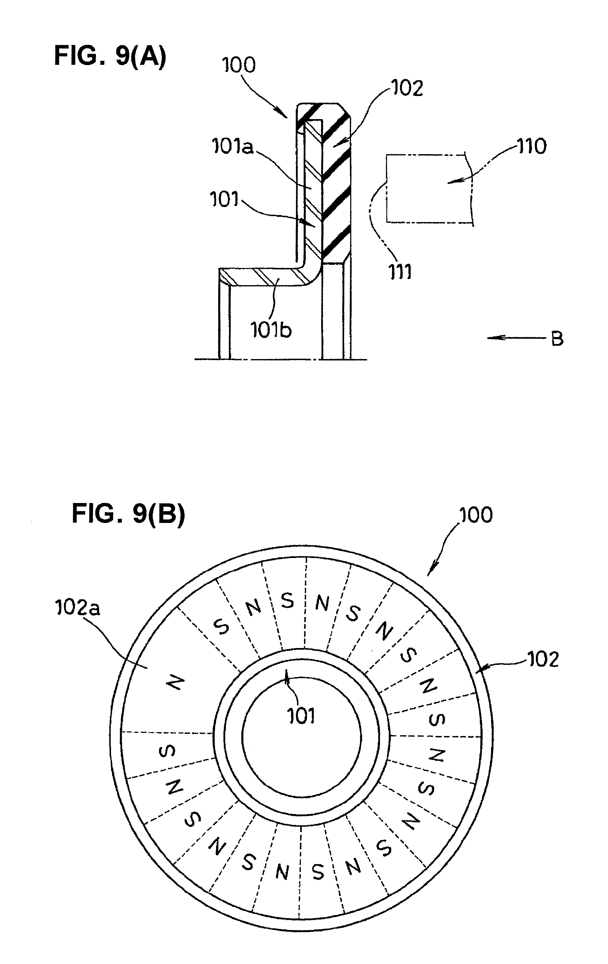

Fig. 9 shows an example of a pulsar ring 100 for a magnetic rotary encoder in accordance with a prior art, in which Fig. 9A is a half sectional view cut along a plane passing through an axis, and Fig. 9B is a view as seen from an arrow in a direction B in Fig. 9A. As shown in Fig. 9, the pulsar ring 100 is attached to a rotating body (for example, a rotating shaft) which is not illustrated, and is constituted by an annular holder 101 manufactured by a magnetic metal and installed to the rotating body (not shown) in a cylinder portion 101b in an inner periphery, and a magnetized layer 102 integrally bonded to a disc portion 101a of the holder 101. The magnetized layer 102 is formed in a disc shape having a uniform thickness circumferentially by a rubber elastic material in which a magnetic fine particle is mixed, and is structured such that a north pole (N pole) and a south pole (S pole) are alternately magnetized in a circumferential direction.

The pulsar ring 100 structures a magnetic rotary encoder together with a magnetic sensor 110 which is arranged in a non-rotating state so as to face to the magnetized layer 102 close thereto in an axial direction. In other words, when the pulsar ring 100 rotates together with the rotating body, the magnetic sensor 110 outputs a signal having a wave form corresponding to a magnetic field generated by alternate passing of the N pole and the S pole of the magnetized layer 102 of the pulsar ring 100 through a front face of a detecting surface 111 of the magnetic sensor 110. Accordingly, the magnetic rotary encoder can measure a rotation of the rotating body on the basis of a count of the pulse (for example, refer to Patent Document 1: Japanese Unexamined Patent Publication No. 2002-131082).

In this case, for example, in a magnetic rotary encoder installed to a crank shaft for detecting a crank angle of an engine, a rotation angle measurement starting point for detecting a specific position, for example, a top dead center of a piston or the like, is provided at one position in a circumferential direction of the magnetized layer 102 of the pulsar ring 100, for the purpose of controlling an ignition timing or the like. Further, the rotation angle measurement starting point is conventionally formed by arranging a portion 102a having a different magnetized length in a diametrical direction or a different magnetized pitch in a circumferential direction, or a non-magnetized portion at one position in a circumferential direction, as shown in Fig. 9B.

However, in order to manufacture the pulsar ring 100 having the portion 102a having the different magnetized length or the different magnetized pitch at one position in the circumferential direction, it is necessary to manufacture an exclusive magnetizing head for each item according to a size or the like, and there is a problem that a manufacturing cost of the magnetizing head mentioned above becomes high. Further, since a position detecting portion by the portion having the different magnetized length or the different magnetized pitch can not be visually identified, there is a risk that an erroneous attachment occurs at a time of attaching the pulsar ring 100.

### Disclosure of the Invention

The present invention is made by taking the points mentioned above into consideration, and a technical object thereof is to provide a pulsar ring for a magnetic rotary encoder provided with a rotation angle starting point portion regardless of a magnetized pitch.

### Means for Solving the Problem

As a means for effectively achieving the technical object mentioned above, in accordance with a first aspect of the present invention, there is provided a pulsar ring for a magnetic rotary encoder, wherein a magnetized layer is integrally bonded to an annular holder installed to a rotating body, the magnetized layer being made of a material obtained by mixing a magnetic fine particle to a rubber elastic material or a synthetic resin material and magnetized in a multipolar manner at a predetermined pitch in a circumferential direction, and a portion having a different sectional shape from the other portions is formed in a part in a circumferential direction in a joining part of the holder with the magnetized layer.

Further, in accordance with a second aspect of the present invention, there is provided a pulsar ring for a magnetic rotary encoder as recited in the first aspect, wherein the portion having the different sectional shape is constituted by a raised portion of a holder to the magnetized layer side, a punched portion or a depressed portion to an opposite side to the magnetized layer.

In accordance with the structure of the first aspect or the second aspect, since a strength of a magnetized magnetic field becomes different in this portion from the other portions by forming the joining part of the holder with the magnetized layer in a different sectional shape in a part in a circumferential direction, a significant point is formed in an output wave form per rotation, and becomes a rotation angle measurement starting point for detecting a specific position.

In accordance with a third aspect of the present invention, there is provided a pulsar ring for a magnetic rotary encoder, wherein a magnetized layer is integrally bonded to an annular holder installed to a rotating body, the magnetized layer being made of a material obtained by mixing a magnetic fine particle to a rubber elastic material or a synthetic resin material and magnetized in a multipolar manner at a predetermined pitch in a circumferential direction, and a portion having a different sectional shape from the other portions is formed in a part in a circumferential direction in the magnetized layer.

Further, in accordance with a fourth aspect of the present invention, there is provided a pulsar ring for a magnetic rotary encoder as recited in the third aspect, wherein the portion having the different sectional shape is constituted by a relatively thin portion, a relatively thick portion, a concave portion or a convex portion formed in the magnetized layer.

In accordance with the structure of the third aspect or the fourth aspect, since a thickness of the magnetized layer or a facing distance to the magnetic sensor is different in the portion in which a shape of the magnetized layer is different in a part in a circumferential direction, from the other portions, a significant point is formed in an output wave form per rotation, and becomes a rotation angle measurement starting point for detecting a specific position.

### Effect of the Invention

In accordance with the pulsar ring for the magnetic rotary encoder on the basis of the first aspect of the present invention, since the rotation angle measurement starting point is formed without the means that the portion having the different magnetized pitch or the non-magnetized portion is provided in one position in the circumferential direction, it is possible to inexpensively provide the pulsar ring having the rotation angle measurement starting point. Further, since the shape of the holder is different in the rotation angle measurement starting point, it is possible to visually identify the rotation angle measurement starting point.

In accordance with the pulsar ring for the magnetic rotary encoder on the basis of the second aspect of the present invention, it is possible to form the portion having the different holder shape recited in the first aspect, at the same time of manufacturing the holder by a punching press of a metal plate.

In accordance with the pulsar ring for the magnetic rotary encoder on the basis of the third aspect of the present invention, since the rotation angle measurement starting point is formed without the means that the portion having the different magnetized pitch or the non-magnetized portion is provided in one position in the circumferential direction, it is possible to inexpensively provide the pulsar ring having the rotation angle measurement starting point. Further, since the shape of the magnetized layer is different in the rotation angle measurement starting point, it is possible to visually identify the rotation angle measurement starting point.

In accordance with the pulsar ring for the magnetic rotary encoder on the basis of the fourth aspect of the present invention, it is possible to form the portion having the different magnetized layer shape recited in the third aspect, at the same time of integrally forming the magnetized layer in the holder in accordance with a metal mold shape or the holder shape as recited in the first aspect or the second aspect.

### Brief Description of the Drawings

Fig. 1 shows a first embodiment of a pulsar ring for a magnetic rotary encoder in accordance with the present invention, in which Fig. 1A is a half sectional view cut by a plane passing through an axis, and Fig. 1B is a view as seen from an arrow in a direction B in Fig. 1A;
Fig. 2 is an explanatory view showing an output wave form by the pulsar ring in accordance with the first embodiment;
Fig. 3 shows a second embodiment of the pulsar ring for the magnetic rotary encoder in accordance with the present invention, in which Fig. 3A is a half sectional view cut by a plane passing through an axis, and Fig. 3B is a view as seen from an arrow in a direction B in Fig. 3A;
Fig. 4 shows a third embodiment of the pulsar ring for the magnetic rotary encoder in accordance with the present invention, in which Fig. 4A is a half sectional view cut by a plane passing through an axis, and Fig. 4B is a view as seen from an arrow in a direction B in Fig. 4A;
Fig. 5 shows a fourth embodiment of the pulsar ring for the magnetic rotary encoder in accordance with the present invention, in which Fig. 5A is a half sectional view cut by a plane passing through an axis, and Fig. 5B is a view as seen from an arrow in a direction B in Fig. 5A;
Fig. 6 is an explanatory view showing an output wave form by the pulsar ring in accordance with the fourth embodiment;
Fig. 7 shows a fifth embodiment of the pulsar ring for the magnetic rotary encoder in accordance with the present invention, in which Fig. 7A is a half sectional view cut by a plane passing through an axis, and Fig. 7B is a view as seen from an arrow in a direction B in Fig. 7A;
Fig. 8 shows a sixth embodiment of the pulsar ring for the magnetic rotary encoder in accordance with the present invention, in which Fig. 8A is a half sectional view cut by a plane passing through an axis, and Fig. 8B is a view as seen from an arrow in a direction B in Fig. 8A; and
Fig. 9 shows an example of a pulsar ring for a magnetic rotary encoder in accordance with a prior art, in which Fig. 9A is a half sectional view cut by a plane passing through an axis, and Fig. 9B is a view as seen from an arrow in a direction B in Fig. 9A.

### Description of Reference Numerals

- 1: pulsar ring
- 11: holder
- 11a: disc portion
- 11b: cylinder portion
- 11c: raised portion
- 11d: punched portion
- 11e: depressed portion
- 12: magnetized layer
- 12a: thin portion
- 12b: portion corresponding to punched portion
- 12c: concave portion
- 12d: thick portion
- 12e: convex portion
- 12f: concave portion
- 2: magnetic sensor
- 2a: detection surface

### Best Mode for Carrying Out the Invention

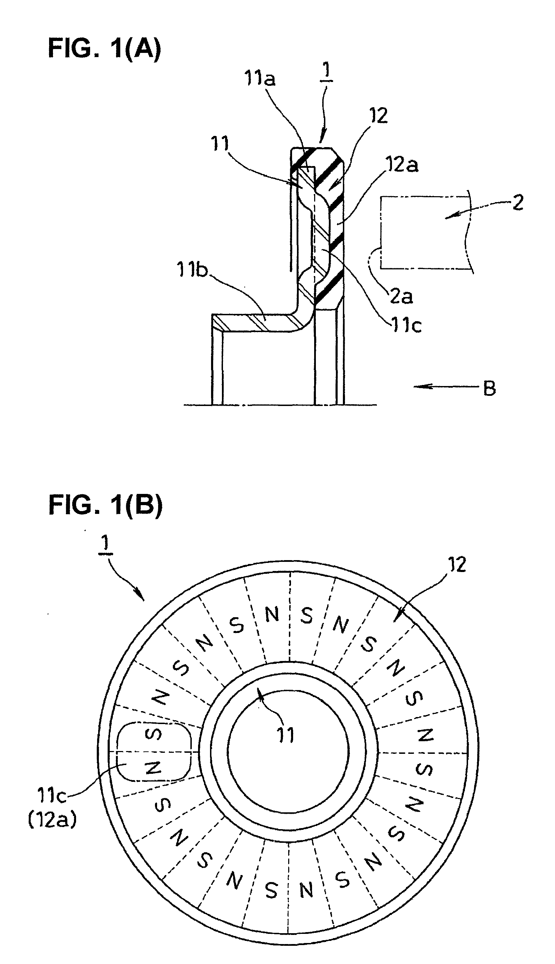

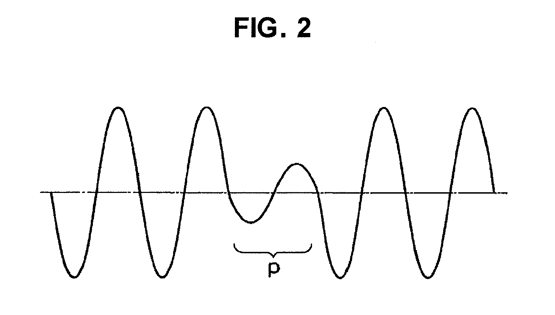

A description will be given below of a preferable embodiment of a pulsar ring for a magnetic rotary encoder in accordance with the present invention with reference to the accompanying drawings. First, Fig. 1 shows a first embodiment of a pulsar ring for a magnetic rotary encoder in accordance with the present invention, in which Fig. 1A is a half sectional view cut by a plane passing through an axis, and Fig. 1B is a view as seen from an arrow in a direction B in Fig. 1A, and Fig. 2 is an explanatory view showing an output wave form by the pulsar ring in accordance with the first embodiment.

A pulsar ring 1 shown in Fig. 1 is structured such that a magnetized layer 12, which is made of a material obtained by mixing a magnetic powder to a rubber elastic material or a synthetic resin material and in which an N pole and an S pole are alternately magnetized (magnetized in a multipolar manner) at a predetermined pitch in a circumferential direction, is integrally bonded to an annular holder 11 installed to an outer periphery of a rotating body such as a crank shaft (not shown) or the like.

In detail, the holder 11 is manufactured by punching press forming of a magnetic metal plate such as a steel plate or the like, and is constituted by a cylinder portion 11b, and a disc portion 11a expanding approximately perpendicularly to an axis from one end in an axial direction of the cylinder portion 11b. A magnetized layer 12 is formed in a disc shape, and is integrally bonded to one side in an axial direction of the disc portion 11a of the holder 11. In other words, the pulsar ring 1 is structured such that the magnetized layer 12 is vulcanized and bonded integrally to the disc portion 11a at a time of molding, by setting the holder 11, to which a vulcanization adhesive agent is previously applied, within a predetermined metal mold (not shown), filling a unvulcanized rubber material or the like, to which a magnetic powder is mixed, into an annular cavity defined between an inner surface of the metal mold and the disc portion 11a in a mold clamping state, and then heating and pressurizing it. Thereafter, the magnetized layer 12 is made by being magnetized in a multipolar manner at a uniform pitch in a circumferential direction by using a magnetizing head (not shown).

The disc portion 11a of the holder 11 corresponds to a joining part described in the first aspect of the present invention, a raised portion 11c punched out toward the magnetized layer 12 side is formed as a portion having a different shape from the other portion in the first aspect of the present invention, in a part in a circumferential direction, and the other portions in the disc portion 11a are formed in a flat shape. The raised portion 11c is formed at the same time of manufacturing the holder 11 in accordance with punching press forming of the magnetic metal plate such as the steel plate or the like. Further, since an end surface of the magnetized layer 12 is formed in an approximately perpendicular flat shape to an axis, a portion corresponding to the raised portion 11c in the disc portion 11a of the holder 11 is formed as a thin portion 12a which is formed thinner than the other portions.

In this case, the raised portion 11c in the disc portion 11a of the holder 11 is formed in a region over a pair of magnetic poles, in an example shown in Fig. 1B, however, is not limited to this.

The pulsar ring 1 having the structure mentioned above constitutes a magnetic rotary encoder together with a magnetic sensor 2 arranged in a non-rotatable state so as to face to the magnetized layer 12 close thereto in an axial direction. In other words, in the magnetic rotary encoder, when the pulsar ring 1 rotates together with the rotating body, the magnetic sensor 2 outputs a signal having a wave form corresponding to a magnetic field generated by an alternate passing of the N pole and the S pole of the magnetized layer 12 of the pulsar ring 1 through a front of a detection surface 2a of the magnetic sensor 2.

In this case, in the magnetized layer 12 of the pulsar ring 1, a magnetic field strength is small in a thin portion 12a corresponding to the raised portion 11c in the disc portion 11a of the holder 11. Accordingly, since a significant point p having a small signal level as shown in Fig. 2 is formed in a wave form of an output signal from the magnetic sensor 2 every time when the thin portion 12a passes through the front of the detection surface 2a of the magnetic sensor 2, it is possible to set the significant point p to a rotation angle measurement starting point. Accordingly, since it is not necessary to manufacture the magnetizing head exclusive for each item, such as the case that the rotation angle measurement starting point is set in accordance with the portion having the different magnetized length in the diametrical direction or the different magnetized pitch at one position in the circumferential direction, it is possible to manufacture the pulsar ring 1 at a low cost.

Further, since the rotation angle measurement starting point is a portion corresponding to the raised portion 11c of the disc portion 11a in the holder 11, it is possible to identify the position thereof in accordance with a visual observation. Accordingly, it is possible to easily make correct positioning in the circumferential direction at a time of attaching the pulsar ring 1, and it is also possible to prevent occurrence of erroneous attachment.

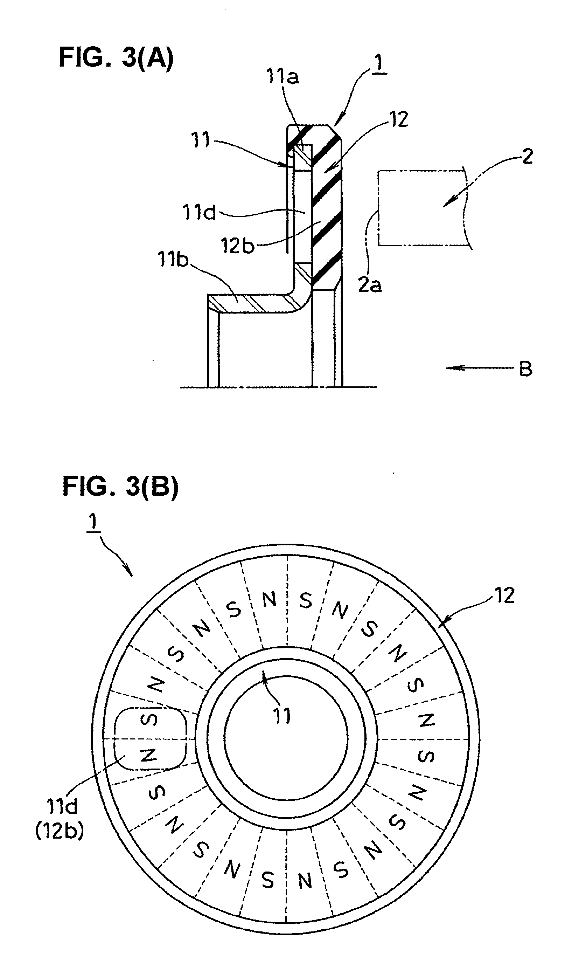

Next, Fig. 3 shows a second embodiment of the pulsar ring for the magnetic rotary encoder in accordance with the present invention, in which Fig. 3A is a half sectional view cut by a plane passing through an axis, and Fig. 3B is a view as seen from an arrow in a direction B in Fig. 3A.

In the pulsar ring 1 in accordance with the second embodiment shown in Fig. 3, a different point from the first embodiment shown in Fig. 1 exists in a point that a punched portion 11d is formed as a portion having a different shape from the other portion in the first aspect of the present invention, in a part in the circumferential direction of the disc portion 11a of the holder 11.

The punched portion 11d of the disc portion 11a in the holder 11 is punched at the same time of manufacturing the holder 11 in accordance with punching press forming of the magnetic metal plate such as the steel plate or the like, and the magnetized layer 12 is formed in a disc shape in which a thickness in an axial direction is uniform circumferentially.

In this case, the punched portion 11d in the disc portion 11a of the holder 11 is formed in a region over a pair of magnetic poles in the embodiment shown in Fig. 3B, however, is not limited to this.

The pulsar ring 1 having the structure in Fig. 3 constitutes the magnetic rotary encoder in the same manner as the first embodiment. When the pulsar ring 1 rotates together with the rotating body, the magnetic sensor 2 outputs the signal having the wave form corresponding to the magnetic field generated by the alternate passing of the N pole and the S pole of the magnetized layer 12 of the pulsar ring 1 through the front of the detection surface 2a.

In this case, in the other portions than the punched portion 11d in the disc portion 11a of the holder 11, in the magnetized layer 12 of the pulsar ring 1, a magnetic circuit passing through the disc portion 11a of the holder 11 is formed between the N pole and the S pole, however, since the magnetic circuit passing through the disc portion 11a is not formed in the portion 12b corresponding to the punched portion 11d in the disc portion 11a of the holder 11, in the magnetized layer 12, the magnetic field strength is small in this portion 12b. Accordingly, since the significant point p having the small signal level is formed in the wave form of the output signal from the magnetic sensor 2, in the same manner as Fig. 2 at every time when the portion 12b corresponding to the punched portion 11d passes through the front of the detection surface 2a of the magnetic sensor 2, it is possible to set the significant point p to the rotation angle measurement starting point. Therefore, since it is not necessary to manufacture the magnetizing head exclusive for each item, such as the case that the rotation angle measurement starting point is set in accordance with the portion having the different magnetized length in the diametrical direction or the different magnetized pitch at one position in the circumferential direction, it is possible to manufacture the pulsar ring 1 at a low cost.

Further, since the rotation angle measurement starting point is the portion corresponding to the punched portion 11d in the disc portion 11a of the holder 11, it is possible to identify the position thereof in accordance with a visual observation. Accordingly, it is easy to make correct positioning in the circumferential direction at a time of attaching the pulsar ring 1, and it is possible to prevent occurrence of attachment.

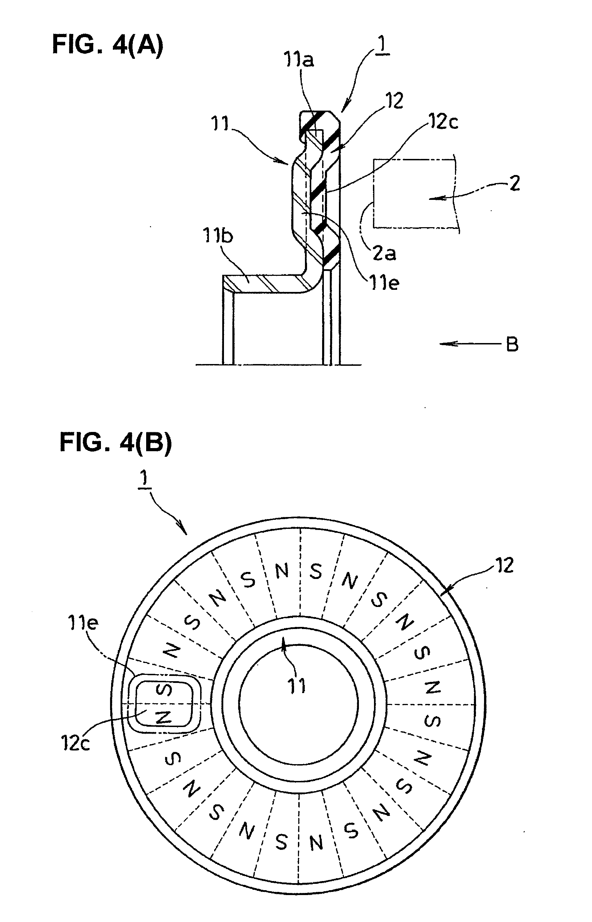

Next, Fig. 4 shows a third embodiment of the pulsar ring for the magnetic rotary encoder in accordance with the present invention, in which Fig. 4A is a half sectional view cut by a plane passing through an axis, and Fig. 4B is a view as seen from an arrow in a direction B in Fig. 4A.

In the pulsar ring 1 in accordance with the third embodiment shown in Fig. 4, a different point from the first and second embodiments previously described exists in a point that a depressed portion 11e punched out toward an opposite side to the magnetized layer 12 is formed as a portion having a different shape from the other portion in the first aspect of the present invention, in a part in the circumferential direction of the disc portion 11a of the holder 11, and a concave portion 12c is formed in the magnetized layer 12 in correspondence to the depressed portion 11e.

The depressed portion 11e in the disc portion 11a of the holder 11 is formed at the same time of manufacturing the holder 11 in accordance with punching press forming of the magnetic metal plate such as the steel plate or the like. The magnetized layer 12 is formed in such a manner that a thickness is uniform circumferentially in anentire periphery including the concave portion 12c.

In this case, the depressed portion 11e in the disc portion 11a of the holder 11 is formed in a region over a pair of magnetic poles in the embodiment shown in Fig. 4B, however, is not limited to this.

In the pulsar ring 1 having the structure in Fig. 4, in the same manner as the previously described first and second embodiments, when the pulsar ring 1 rotates together with the rotating body, the magnetic sensor 2 outputs the signal having the wave form corresponding to the magnetic field generated by the alternate passing of the N pole and the S pole of the magnetized layer 12 of the pulsar ring 1 through the front of the detection surface 2a.

In this case, since a distance in an axial direction between the magnetized layer 12 of the pulsar ring 1 and the detection surface 2a of the magnetic sensor 2 becomes longer in the concave portion 12c corresponding to the depressed portion 11e in the disc portion 11a of the holder 11, the magnetic field strength applied to the detection surface 2a of the magnetic sensor 2 becomes smaller in the concave portion 12c. Accordingly, since the significant point p having the smaller signal level is formed in the wave form of the output signal from the magnetic sensor 2, in the same manner as Fig. 2, at every time when the concave portion 12c passes through the front of the detection surface 2a of the magnetic sensor 2, it is possible to set the significant point p to the rotation angle measurement starting point. Therefore, since it is not necessary to manufacture the magnetizing head exclusive for each item, such as the case that the rotation angle measurement starting point is set in accordance with the portion having the different magnetized length in the diametrical direction or the different magnetized pitch at one position in the circumferential direction, it is possible to manufacture the pulsar ring 1 at a low cost.

Further, since the rotation angle measurement starting point is the portion corresponding to the depressed portion 11e in the disc portion 11a of the holder 11 and the concave portion 12c in the magnetized layer 12 corresponding thereto, it is possible to identify the position thereof in accordance with a visual observation. Accordingly, it is easy to make correct positioning in the circumferential direction at a time of attaching the pulsar ring 1, and it is possible to prevent occurrence of erroneous attachment.

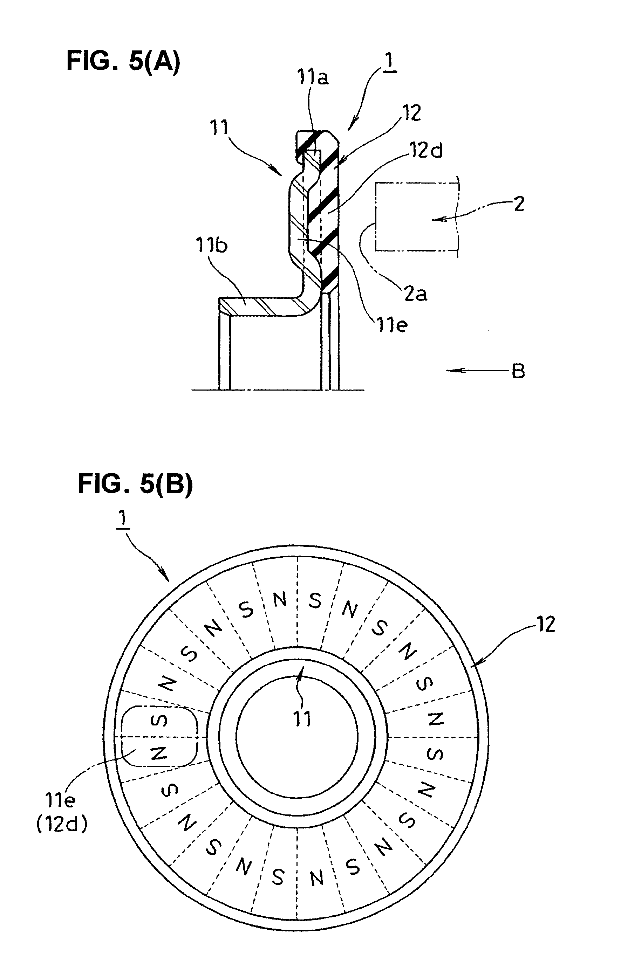

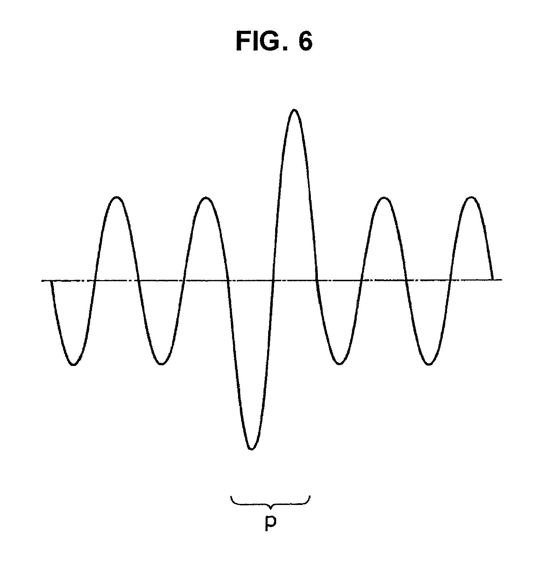

Next, Fig. 5 shows a fourth embodiment of the pulsar ring for the magnetic rotary encoder in accordance with the present invention, in which Fig. 5A is a half sectional view cut by a plane passing through an axis, and Fig. 5B is a view as seen from an arrow in a direction B in Fig. 5A, and Fig 6 is an explanatory view showing an output wave form by the pulsar ring in accordance with the fourth embodiment.

In the pulsar ring 1 in accordance with the fourth embodiment shown in Fig. 5, a different point from the previously described embodiments exists in a point that the depressed portion 11e punched out toward the opposite side to the magnetized layer 12 is formed as the portion having the different shape from the other portion in the first aspect of the present invention, in a part in the circumferential direction of the disc portion 11a of the holder 11, and an end surface of the magnetized layer 12 is formed in an approximately perpendicular flat shape to an axis, whereby the portion corresponding to the depressed portion 11e is a thick portion 12d formed thicker than the other portions.

The depressed portion 11e in the disc portion 11a of the holder 11 is formed at the same time of manufacturing the holder 11 in accordance with punching press forming of the magnetic metal plate such as the steel plate or the like. In this case, the depressed portion 11e is formed in a region over a pair of magnetic poles in the embodiment shown in Fig. 5B, however, is not limited to this.

In the pulsar ring 1 having the structure in Fig. 5, in the same manner as each of the previously described embodiments, when the pulsar ring 1 rotates together with the rotating body, the magnetic sensor 2 outputs the signal having the wave form corresponding to the magnetic field generated by the alternate passing of the N pole and the S pole of the magnetized layer 12 of the pulsar ring 1 through the front of the detection surface 2a.

In this case, the magnetic field strength is large in the thick portion 12d corresponding to the depressed portion 11e in the disc portion 11a of the holder 11. Accordingly, since the significant point p having the large signal level as shown in Fig. 6 is formed in the wave form of the output signal from the magnetic sensor 2, at every time when the thick portion 12d passes through the front of the detection surface 2a of the magnetic sensor 2, it is possible to set the significant point p to the rotation angle measurement starting point. Therefore, since it is not necessary to manufacture the magnetizing head exclusive for each item, such as the case that the rotation angle measurement starting point is set in accordance with the portion having the different magnetized length in the diametrical direction or the different magnetized pitch at one position in the circumferential direction, it is possible to manufacture the pulsar ring 1 at a low cost.

Further, since the rotation angle measurement starting point is the portion corresponding to the depressed portion 11e in the disc portion 11a of the holder 11, it is possible to identify the position thereof in accordance with a visual observation. Accordingly, it is easy to make correct positioning in the circumferential direction at a time of attaching the pulsar ring 1, and it is possible to prevent occurrence of erroneous attachment.

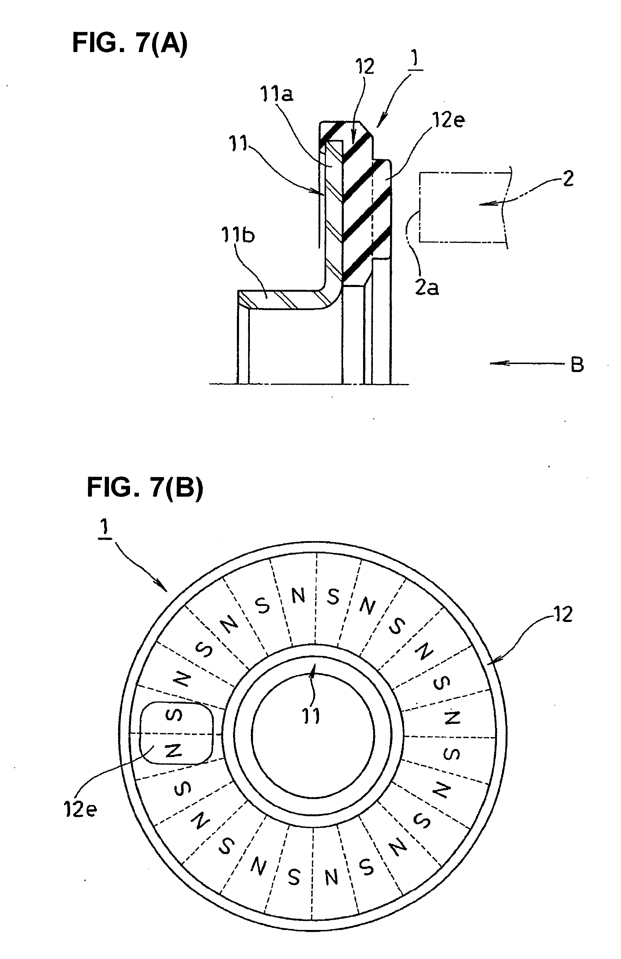

Next, Fig. 7 shows a fifth embodiment of the pulsar ring for the magnetic rotary encoder in accordance with the present invention, in which Fig. 7A is a half sectional view cut by a plane passing through an axis, and Fig. 7B is a view as seen from an arrow in a direction B in Fig. 7A.

In the pulsar ring 1 in accordance with the fifth embodiment shown in Fig. 7, a different point from each of the previously described embodiments exists in a point that an entire periphery of the disc portion 11a of the holder 11 is formed in a disc shape which is approximately perpendicular to the axis, and a convex portion (which may be called as a thick portion) 12e in an axial direction is formed as a portion having the different shapes from the other portions in the third aspect of the present invention, in a part in the circumferential direction of the magnetized layer 12 integrally bonded to the disc portion 11a.

In this case, the convex portion 12e of the magnetized layer 12 is formed in a region over a pair of magnetic poles in the embodiment shown in Fig. 7B, however, is not limited to this.

In the pulsar ring 1 having the structure in Fig. 7, in the same manner as each of the previously described embodiments, when the pulsar ring 1 rotates together with the rotating body, the magnetic sensor 2 outputs the signal having the wave form corresponding to the magnetic field generated by the alternate passing of the N pole and the S pole of the magnetized layer 12 of the pulsar ring 1 through the front of the detection surface 2a.

In this case, since the magnetized layer 12 of the pulsar ring 1 is thick in the magnetizing direction in the convex portion 12e, the magnetic field strength is relatively large. Besides, since a distance in the axial direction from the detection surface 2a of the magnetic sensor 2 is shorter in the convex portion 12e, the magnetic field strength applied to the detection surface 2a of the magnetic sensor 2 becomes larger. Accordingly, since the significant point p having the larger signal level is formed in the wave form of the output signal from the magnetic sensor 2, in the same manner as Fig. 6 at every time when the convex portion 12e passes through the front of the detection surface 2a of the magnetic sensor 2, it is possible to set the significant point p to the rotation angle measurement starting point. Therefore, since it is not necessary to manufacture the magnetizing head exclusive for each item, such as the case that the rotation angle measurement starting point is set in accordance with the portion having the different magnetized length in the diametrical direction or the different magnetized pitch at one position in the circumferential direction, it is possible to manufacture the pulsar ring 1 at a low cost.

Further, since the rotation angle measurement starting point is the portion corresponding to the convex portion 12e of the magnetized layer 12, it is possible to identify the position thereof in accordance with a visual observation. Accordingly, it is easy to make correct positioning in the circumferential direction at a time of attaching the pulsar ring 1, and it is possible to prevent occurrence of erroneous attachment.

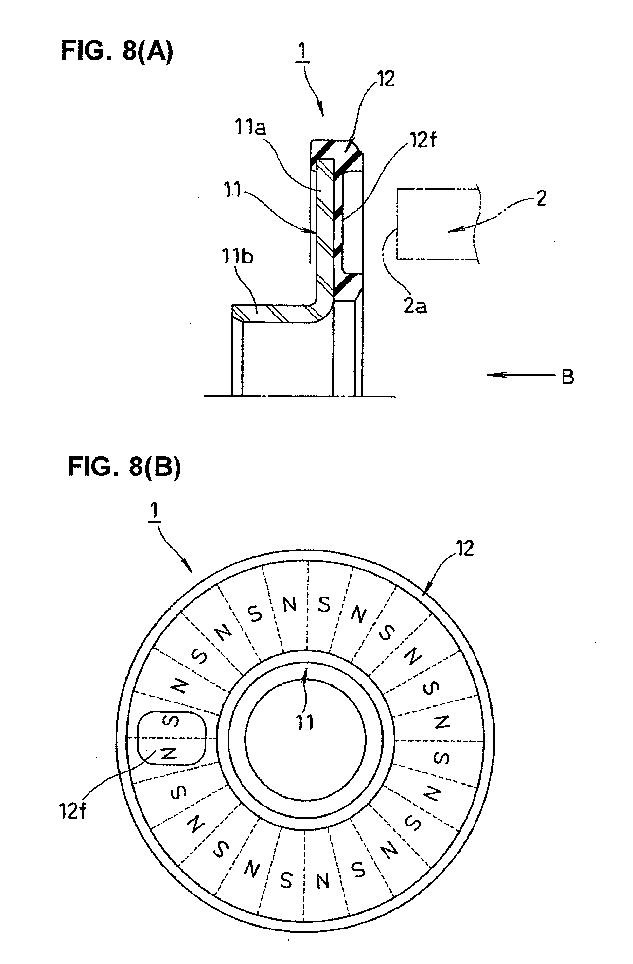

Next, Fig. 8 shows a sixth embodiment of the pulsar ring for the magnetic rotary encoder in accordance with the present invention, in which Fig. 8A is a half sectional view cut by a plane passing through an axis, and Fig. 8B is a view as seen from an arrow in a direction B in Fig. 8A.

In the pulsar ring 1 in accordance with the sixth embodiment shown in Fig. 8, a different point from each of the previously described embodiments exists in a point that an entire periphery of the disc portion 11a of the holder 11 is formed in a disc shape which is approximately perpendicular to the axis, and a concave portion (which may be called as a thin portion) 12f in an axial direction is formed as a portion having the different shapes from the other portions in the third aspect of the present invention, in a part in the circumferential direction of the magnetized layer 12 integrally bonded to the disc portion 11a.

In this case, the concave portion 12f of the magnetized layer 12 is formed in a region over a pair of magnetic poles in the embodiment shown in Fig. 8B, however, is not limited to this.

In the pulsar ring 1 having the structure in Fig. 8, in the same manner as each of the previously described embodiments, when the pulsar ring 1 rotates together with the rotating body, the magnetic sensor 2 outputs the signal having the wave form corresponding to the magnetic field generated by the alternate passing of the N pole and the S pole of the magnetized layer 12 of the pulsar ring 1 through the front of the detection surface 2a.

In this case, since the magnetized layer 12 of the pulsar ring 1 is thin in the magnetizing direction in the concave portion 12f, the magnetic field strength is relatively small. Besides, since a distance in the axial direction from the detection surface 2a of the magnetic sensor 2 becomes longer in the concave portion 12f, the magnetic field strength applied to the detection surface 2a of the magnetic sensor 2 becomes smaller. Accordingly, since the significant point p having the smaller signal level is formed in the wave form of the output signal from the magnetic sensor 2, in the same manner as Fig. 2, at every time when the concave portion 12f passes through the front of the detection surface 2a of the magnetic sensor 2, it is possible to set the significant point p to the rotation angle measurement starting point. Therefore, since it is not necessary to manufacture the magnetizing head exclusive for each item, such as the case that the rotation angle measurement starting point is set in accordance with the portion having the different magnetized length in the diametrical direction or the different magnetized pitch at one position in the circumferential direction, it is possible to manufacture the pulsar ring 1 at a low cost.

Further, since the rotation angle measurement starting point is the portion corresponding to the concave portion 12f of the magnetized layer 12, it is possible to identify the position thereof in accordance with a visual observation. Accordingly, it is easy to make correct positioning in the circumferential direction at a time of attaching the pulsar ring 1, and it is possible to prevent occurrence of erroneous attachment.

All of the embodiments mentioned above are described as the embodiments where the present invention is applied to the structure that the magnetized layer 12 is integrally formed in the disc shape on the disc portion 11a of the holder 11, however, the present invention can be applied, for example, to a structure that a cylindrical magnetized layer is integrally bonded to an outer peripheral surface of a cylinder portion which is attached to the rotating body at a disc portion (a flange portion) in an inner periphery and is formed in an outer periphery thereof, by forming the portion having the different sectional shape from the other portions in a part in a circumferential direction of the cylinder portion or the cylindrical magnetized layer.

### Industrial Applicability

The present invention can offer the structure that a pulsar ring for a magnetic rotary encoder detecting the rotation of a rotating body is provided with a rotation angle starting portion by means other than magnetization pitch.

## Claims

1. A pulsar ring for a magnetic rotary encoder, wherein a magnetized layer (12) is integrally bonded to an annular holder (11) installed to a rotating body, the magnetized layer (12) being made of a material obtained by mixing a magnetic fine particle to a rubber elastic material or a synthetic resin material and magnetized in a multipolar manner at a predetermined pitch in a circumferential direction, and a portion having a different sectional shape from the other portions is formed in a part in a circumferential direction in a joining part of said holder (11) with said magnetized layer (12).

2. A pulsar ring for a magnetic rotary encoder as claimed in claim 1, wherein the portion having the different sectional shape is constituted by a raised portion (11c) of the holder (11) to the magnetized layer (12) side, apunchedportion (11d) or a depressed portion (11e) to an opposite side to the magnetized layer (12).

3. A pulsar ring for a magnetic rotary encoder, wherein a magnetized layer (12) is integrally bonded to an annular holder (11) installed to a rotating body, the magnetized layer (12) being made of a material obtained by mixing a magnetic fine particle to a rubber elastic material or a synthetic resin material and magnetized in a multipolar manner at a predetermined pitch in a circumferential direction, and a portion having a different sectional shape from the other portions is formed in a part in a circumferential direction in said magnetized layer (12).

4. A pulsar ring for a magnetic rotary encoder as claimed in claim 3, wherein the portion having the different sectional shape is constituted by a relatively thin portion (12a), a relatively thick portion (12d), a concave portion (12c, 12f) or a convex portion (12e) formed in the magnetized layer (12).
